# EUROPÄISCHE PATENTANMELDUNG

(11) **EP 1 857 158 A1**
(43) Veröffentlichungstag der Anmeldung: **21.11.2007**
(21) Anmeldenummer: 06009998.3
(22) Anmeldetag: 15.05.2006
(51) Int. Cl.: A63G 19/18, B62K 9/00

(54) **Kinderfahrzeug**

(71) Anmelder: Uttscheid, Hartmut, 83026 Rosenheim (DE); Schlosser, Leopold, 83026 Rosenheim (DE)
(72) Erfinder: Schlosser, Leopold, 83026 Rosenheim (DE)
(74) Vertreter: Hartz, Nikolai

(57) **Zusammenfassung**

Kinderfahrzeug (1), umfassend einen Fahrzeugkörper (2), an dem Vorderräder (40, 41) und Hinterräder (50, 51) vorgesehen sind, dadurch gekennzeichnet, dass der Fahrzeugkörper (2) eine nach unten offene Schale aus Faserverbundwerkstoff umfasst, und die Räder über einen Rahmen (3) an der Schale befestigt sind, der mit der Schale verbunden ist.

## Beschreibung

Die vorliegende Erfindung betrifft ein fahrbares Kinderspielzeug insbesondere ein Kinderfahrzeug nach Art eines Autos, Baufahrzeugs, oder Traktors. Speziell betrifft die vorliegende Erfindung ein Kinderfahrzeug mit den Merkmalen des Oberbegriffs von Anspruch 1. Die vorliegende Erfindung betrifft ebenfalls ein System aus einem Kinderfahrzeug und einem Anhänger, der lösbar an dem Kinderfahrzeug befestigt werden kann.

### Stand der Technik

Kinderfahrzeuge, auf denen das Kind sitzend oder kniend fahren kann, erfreuen sich großer Beliebtheit. Herkömmliche Fahrzeuge ahmen dabei, der kindlichen Denkweise angepasst, häufig motorgetriebene Fahrzeuge aus der Erwachsenenwelt nach, wie beispielsweise PKW's, LKW s, Traktoren, oder Nutz-und Baufahrzeuge aller Art.

Dabei sind Kinderfahrzeuge bekannt, die einen blasgeformten Kunststoffkörper umfassen, an dem die Räder vorgesehen werden. Derartige Fahrzeuge haben den Nachteil, dass die Geräuschentwicklung, insbesondere bei unebenem Untergrund, hoch ist.

Aus der DE 20 2004 004 518 ist ein gattungsgemäßes Kinderfahrzeug bekannt, das jedoch den Nachteil aufweist, dass der Fahrzeugkörper nicht witterungsbeständig ist, sowie entweder eine geringe Stabilität oder ein zu hohes Gewicht aufweist. Ferner geht aus dieser Druckschrift kein Weg hervor, wie die Räder mit hoher Haltbarkeit an dem Fahrzeugkörper befestigt werden können.

### Offenbarung der Erfindung

Es ist Aufgabe der vorliegenden Erfindung, ein stabiles und für Kinder attraktives sitzend oder kniend fahrbares Kinderfahrzeug bereitzustellen, bei dem die Geräuschentwicklung auch auf unebenem Untergrund gering ist, das witterungsbeständig ist, ein geringes Gewicht aufweist, eine ansprechende Ästhetik ermöglicht, eine von Kindern als angenehm empfundene Materialtemperatur hat sowie keine Oberflächenbehandlung erfordert.

Diese Aufgabe wird gemäß der vorliegenden Erfindung gelöst mit einem Kinderfahrzeug, umfassend einen Fahrzeugkörper, an dem Vorderräder und Hinterräder vorgesehen sind, wobei der Fahrzeugkörper eine nach unten offene Schale aus Faserverbundwerkstoff umfasst, und die Räder über einen Rahmen an der Schale befestigt sind, der mit der Schale verbunden ist. Vorteilhafte Ausgestaltungen sind Gegenstand der Unteransprüche.

Die Erfindung beruht auf der Erkenntnis, dass die Geräuschentwicklung gesenkt werden kann, wenn das Konzept eines blasgeformten Hohlkörpers als Fahrzeugkörper aufgegeben wird. Die vorliegende Erfindung beruht außerdem auf der Erkenntnis, dass die Stablitätsanforderungen und die Gewichtsanforderungen mit herkömmlichen Materialien und insbesondere ohne einen Rahmen nicht erfüllt werden können. Daher schlägt die vorliegende Erfindung vor, eine nach unten offene Schale aus Faserverbundwerkstoff zu verwenden. Die Räder sind über einen Rahmen an der Schale befestigt, wobei der Rahmen lösbar mit der Schale verbunden ist.

Die Verwendung eines Faserverbundwerkstoffes für den Fahrzeugkörper hat den Vorteil, dass es nicht nur möglich ist, gleichzeitig eine hohe Stabilität des Fahrzeugkörpers bei einem geringem Gewicht und guter Witterungsbeständigkeit zu erreichen, sondern auch dass die Oberfläche des Faserverbundwerkstoffes bei Berührung wegen der vergleichsweise geringen Wärmeleitfähigkeit subjektiv wärmer erscheint als dies bei einer Metalloberfläche der Fall wäre. Die Verwendung eines Faserverbundwerkstoffes ermöglicht eine besonders vorteilhafte und edle Ästhetik ohne dass es einer speziellen Oberflächenbehandlung bedürfte.

Die Erfindung wird nun in weiteren Einzelheiten anhand von bevorzugten Ausführungsformen beschrieben.

Das erfindungsgemäße Kinderfahrzeug umfasst einen Fahrzeugkörper mit einer nach unten offenen Schale aus Faserverbundwerkstoff. Der Fahrzeugkörper lässt sich ergonomisch und optisch optimiert einfach und weitgehend störunanfällig einstückig oder mehrstückig aus Faserverbundwerkstoff herstellen oder zusammensetzen, wobei nur wenige einfache Formteile erforderlich sind. Der Faserverbundwerkstoff enthält vorzugsweise Kohlefaser und Glasfaser. Insbesondere kann ein Kohlefasergewebe auf der Außenseite der Schale vorgesehen sein. Es ist jedoch auch möglich einen Glasfaser gefüllten Kunststoff zu verwenden.

Die nach unten offene Schale aus Faserverbundwerkstoff ist mit einem Rahmen verbunden. Vorzugsweise ist die Schale mit dem Rahmen lösbar verbunden, insbesondere verschraubt. Die Verbindung kann unmittelbar erfolgen oder unter Zwischenschaltung von Dämpfungselementen, die ausgewählt werden können aus einfachen elastomeren Dämpfern bis hin zu einem aufwändigen Federdämpfersystem. Verschiedene Dämpfungselemente können in geeigneter Weise kombiniert werden. Die Verwendung der Dämpfungselemente vermindert die Geräuschentwicklung beim Betrieb des Kinderfahrzeugs auf unebenem Untergrund und trägt zum Fahrkomfort bei. Der Rahmen kann aus jedem beliebigen Material bestehen, soweit eine ausreichende Festigkeit und ein niedriges Gewicht erreicht werden können. Vorzugsweise besteht der Rahmen aus Metall. Insbesondere kann der Rahmen aus Aluminium oder einer Aluminiumlegierung bestehen.

Das Kinderfahrzeug kann in Modulbauweise gefertigt werden, wobei mehrere verschiedene nach unten offene Schalen vorgesehen werden. Auf diese Weise sind verschiedene Fahrzeugkörper mit einem Rahmen als Grundelement kombinierbar bzw. es sind verschiedene Schalen untereinander austauschbar.

An dem Rahmen sind Räder vorgesehen. In einer bevorzugten Ausführungsform sind die Vorderräder lenkbar. Der Lenkmechanismus sollte eine Einschlagbegrenzung vorsehen, durch die eine Quetschgefahr für das spielende Kind ausgeschlossen wird. Der Rahmen hält die Räder, wobei die Vorderräder über eine Lenksäule und ein an deren oberen Ende drehfest angeordnetes Lenkrad schwenkbar sind. Die Betätigung des Lenkrades erfolgt von dem auf dem Kinderfahrzeug sitzenden oder knieenden spielenden Kind, wobei der Sitzbereich in den Fahrzeugkörper integriert oder ein an der nach unten offenen Schale des Fahrzeugkörpers vorgesehener Sitz sein kann.

In einer Ausführungsform kann die Lenkung als Schwenkachslenkung durch das Schwenken einer starren Vorderachse erfolgen. In diesem Fall erfolgt die drehbare Verbindung von Achse zum Rahmen mittels eines Bolzens oder eines Drehgestells.

In einer anderen bevorzugten Ausführungsform erfolgt die Lenkung mittels einer Schwenkachslenkung. Zu diesem Zweck wird an dem Rahmen ein Lenktrapez vorgesehen, das aus einem Achskörper, einer Spurstange und zwei Lenkhebeln besteht. Auf dem Achskörper, der an dem Rahmen vorgesehen wird, befindet sich der um den Achsschenkelbolzen drehbare Achsschenkel der wiederum das Rad trägt. Vorzugsweise greift die Lenksäule an der Spurstange an und bewegt diese bei Drehung der Lenksäule. Dabei ist es möglich das Zusammenwirken von Lenksäule und Spurstange so zu begrenzen, dass eine Einschlagbegrenzung verwirklicht wird.

In einer bevorzugten Ausführungsform sind die Räder mit einer Bereifung versehen. Die Bereifung umfasst vorzugsweise ein Elastomer. Geeignete Materialien sind insbesondere Gummi und ein Polyurethan-Kunststoff. Auf diese Weise kann die Geräuschentwicklung weiter reduziert werden.

Kinderfahrzeuge, bei denen Funktionselemente aus der Erwachsenenwelt übernommen und auf die Kinderwelt übertragen werden, erfreuen sich besonderer Beliebtheit. Daher ist die Kombination des erfindungsgemäßen Kinderfahrzeugs mit weiterem Zubehör besonders vorteilhaft, insbesondere dann, wenn durch das Zubehör das Kinderfahrzeug spielerisch abwechslungsreich gehandhabt werden kann. Entsprechend ist es beispielsweise bevorzugt, das erfindungsgemäße Kinderfahrzeug mit einem Anhänger zu kombinieren und dadurch einen erhöhten Anreiz für den Spieltrieb zu bieten. Durch die hohe Festigkeit des verwendeten Faserverbundwerkstoffs ist es möglich unmittelbar am Fahrezeugkörper eine Anhängerkupplung vorzusehen. Dadurch ist es möglich ein Kinderfahrzeug bereitzustellen, das weiterhin einen Anhänger umfasst, der an der nach unten offenen Schale lösbar befestigt ist. Das erfindungsgemäße Kinderfahrzeug kann insbesondere einem Nutzfahrzeug aus der Ewachsenenwelt nachgeahmt werden, so beispielsweise einem Baustellenkipper oder einem Bagger.

Die Erfindung wird nun anhand der Zeichnungen beschrieben. Es zeigen
Figur 1 eine perspektivische Seitenansicht des erfindungsgemäßen Kinderfahrzeugs;
Figur 2 eine Seitenansicht eines erfindungsgemäßen Kinderfahrzeugs;
Figur 3 eine Draufsicht auf ein erfindungsgemäßes Kinderfahrzeug;
Figur 4 eine Vorderansicht eines erfindungsgemäßen Kinderfahrzeugs;
Figur 5 eine Rückansicht eines erfindungsgemäßen Kinderfahrzeugs;
Figur 6 eine Ansicht von unten in ein erfindungsgemäßes Kinderfahrzeug;
Figur 7 eine Seitenansicht im Schnitt eines erfindungsgemäßen Kinderfahrzeugs; an der Stelle der Auflagepunkte der nach unten offenen Schale auf dem Rahmen;
Figur 8 eine Detailansicht der Schnittzeichnung aus Figur 7; sowie
Figur 9 eine Detailansicht eines Lenkmechanismus aus Figur 6 in der Position der

### Einschlagbegrenzung.

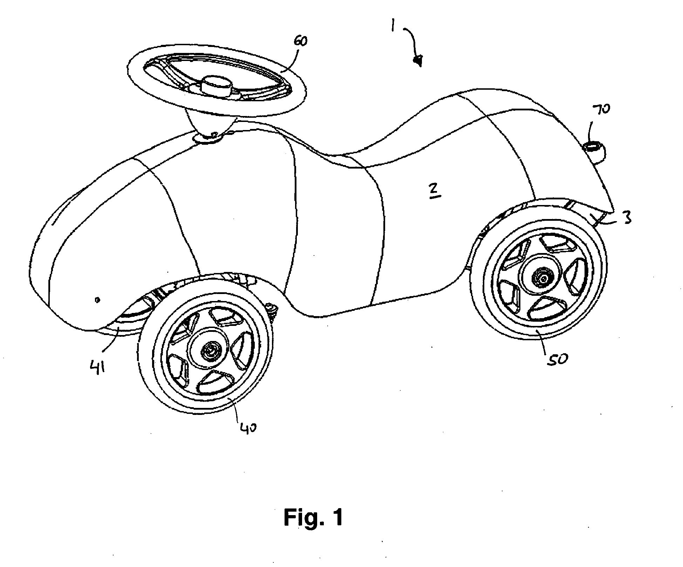

Ein erfindungsgemäßes Kinderfahrzeug 1 wird in Figur 1 gezeigt, das einen Fahrzeugkörper 2 umfasst. Der Fahrzeugkörper 2 besteht aus einer nach unten offenen Schale aus Faserverbundwerkstoff. Der Faserverbundwerkstoff enthält Glasfaser und Kohlefaser, wobei ein Kohlefasergewebe so vorgesehen wird, dass die Oberfläche des Fahrzeugkörpers eine schwarze Farbe aufweist und die Struktur des Kohlefasergewebes erkennen lässt. Durch eine solche Carbon-Anmutung erhält das Kinderfahrzeug ein edles und hochwertiges Aussehen. Das Kinderfahrzeug umfasst Vorderräder 40, 41 und Hinterräder 50, 51. Die Vorderräder sind mittels Achsschenkellenkung lenkbar. Zu diesem Zweck ist auch ein Lenkrad 60 vorgesehen. Die Räder sind über einen Rahmen 3 an der Schale befestigt. Der Rahmen ist lösbar mit der Schale verbunden.

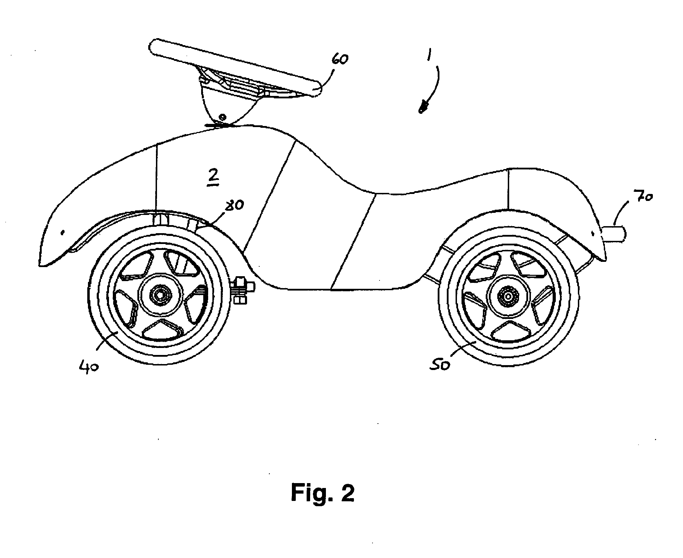

Figur 2 zeigt eine Seitenansicht der Ausführungsform aus Figur 1, wobei eine Lenksäule 80 zu erkennen ist mit dem die Vorderräder bei Betätigung des Lenkrads ausgelenkt werden. Die Anhängerkupplung 70 ist an der nach unten offenen Schale vorgesehen.

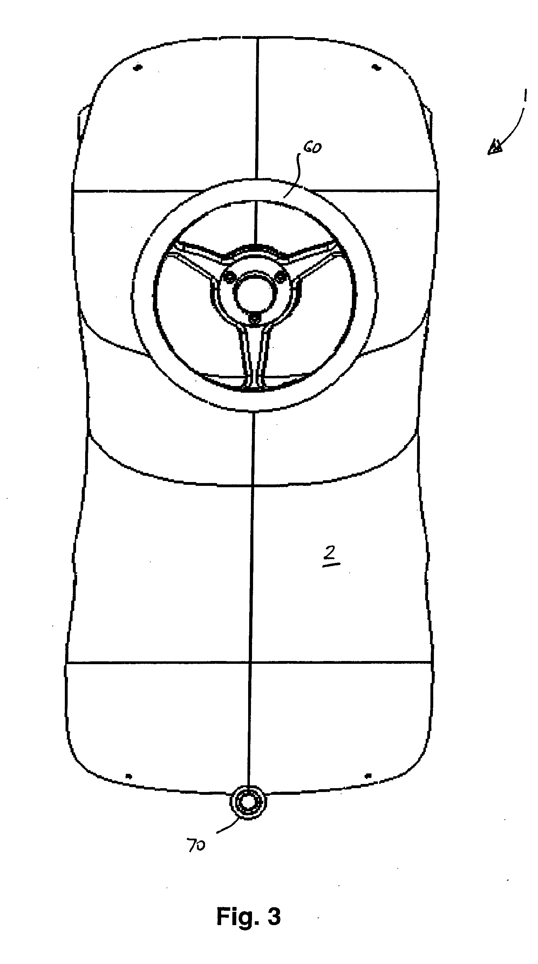

Figur 3 zeigt eine Draufsicht der in Figur 1 gezeigten Ausführungsform, wobei das Lenkrad 60 und eine Anhängerkupplung 70 zu erkennen sind.

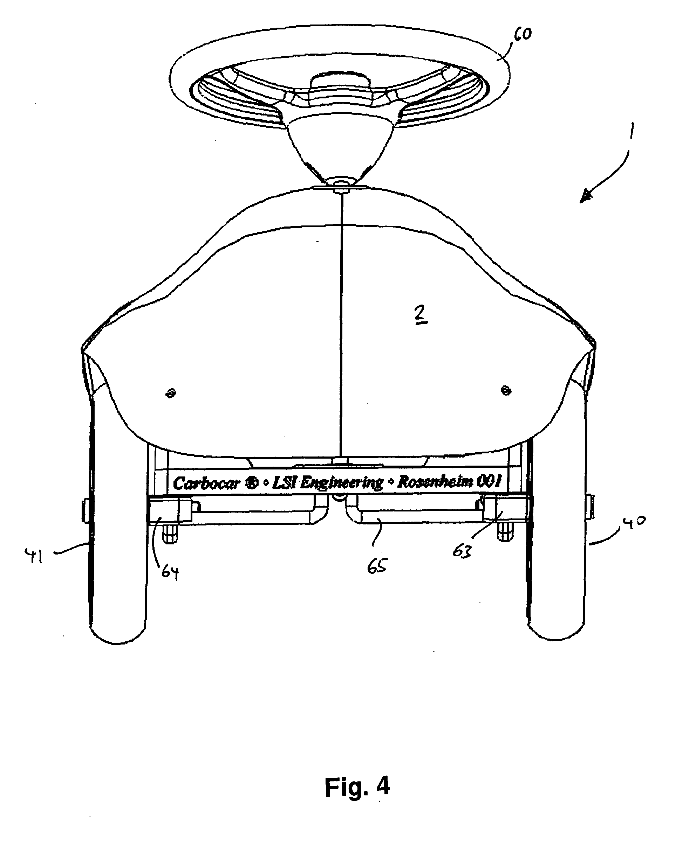

Figur 4 zeigt eine Vorderansicht der Ausführungsform aus Figur 1, wobei die Lenksäule 80 und das Lenktrapez zu erkennen sind. Das Lenktrapez 61 besteht a, das aus Achskörpern 63, 64, einer Spurstange 65 und zwei Lenkhebeln (nicht gezeigt. Die Achskörper 63, 64, die an dem Rahmen 3 vorgesehen sind, tragen die Räder 40, 41. Die Lenksäule greift an der Spurstange an und bewegt diese bei Drehung der Lenksäule. Das Zusammenwirken von Lenksäule 80 und Spurstange 65 wird durch Verklemmen der Lenksäule 80 in der Spurstange 65 begrenzt, so dass eine Einschlagbegrenzung verwirklicht wird.

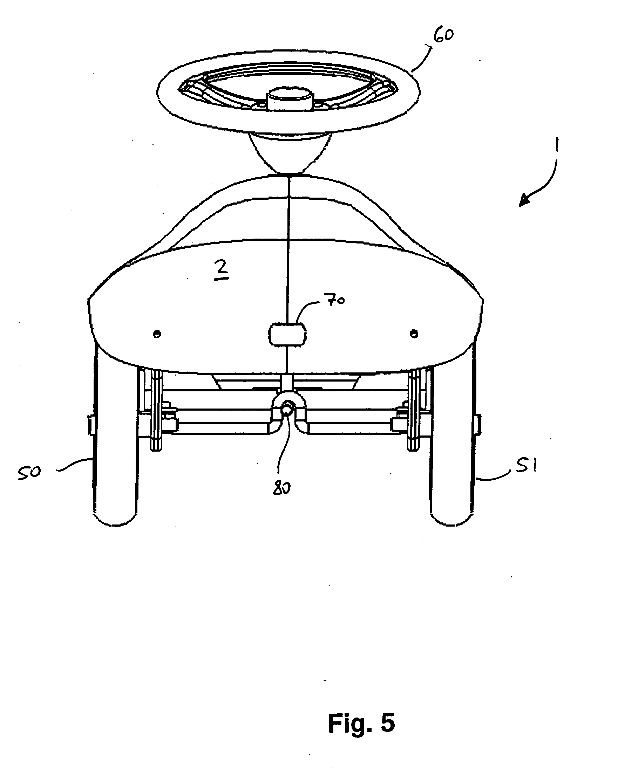

Figur 5 zeigt eine Rückansicht der Ausführungsform aus Figur 1, wobei die Lenksäule 80 und die Befestigung der Anhängerkupplung am Fahrzeugkörper 3 zu erkennen sind. Insbesondere ist die Lenksäule 80 und das Lenktrapez in der Rückansicht zu erkennen sowie der Eingriff der rechtwinklig gekrümmten Lenksäule 80 in einer Führung in der Spurstange 65. Die Führung ist in geeigneter Weise dimensioniert so dass durch Verklemmen der Lenksäule 80 in der Spurstange 65 ein Einschlag der Räder begrenzt wird.

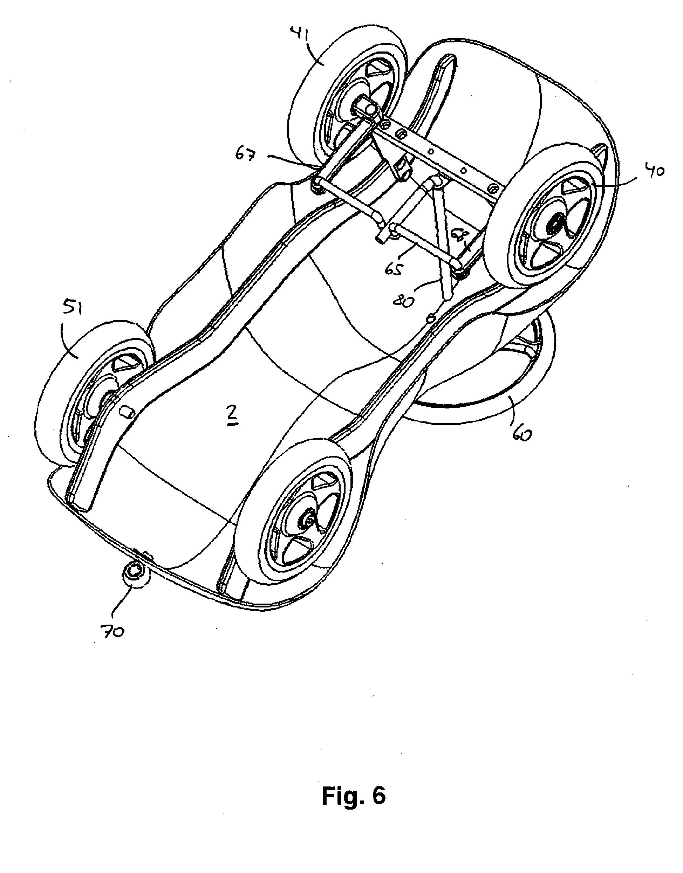

Figur 6 zeigt eine perspektivische Darstellung der Ausführungsform aus Figur 1 mit Blick auf die Unterseite, wobei die Lenksäule 80 und das Lenktrapez zu erkennen sind. Das Lenktrapez 61 besteht aus Achskörpern 63, 64, einer Spurstange 65 und zwei Lenkhebeln 67, 68. Die Achskörper 63, 64, die an dem Rahmen 3 vorgesehen sind, tragen die Vorderräder 40, 41. Das Zusammenwirken von Lenksäule 80 und Spurstange 65 wird durch Verklemmen der Lenksäule 80 in der Spurstange 65 begrenzt, so dass eine Einschlagbegrenzung verwirklicht wird. Hie Hinterräder sind jeweils einzeln am Rahmen 3 befestigt.

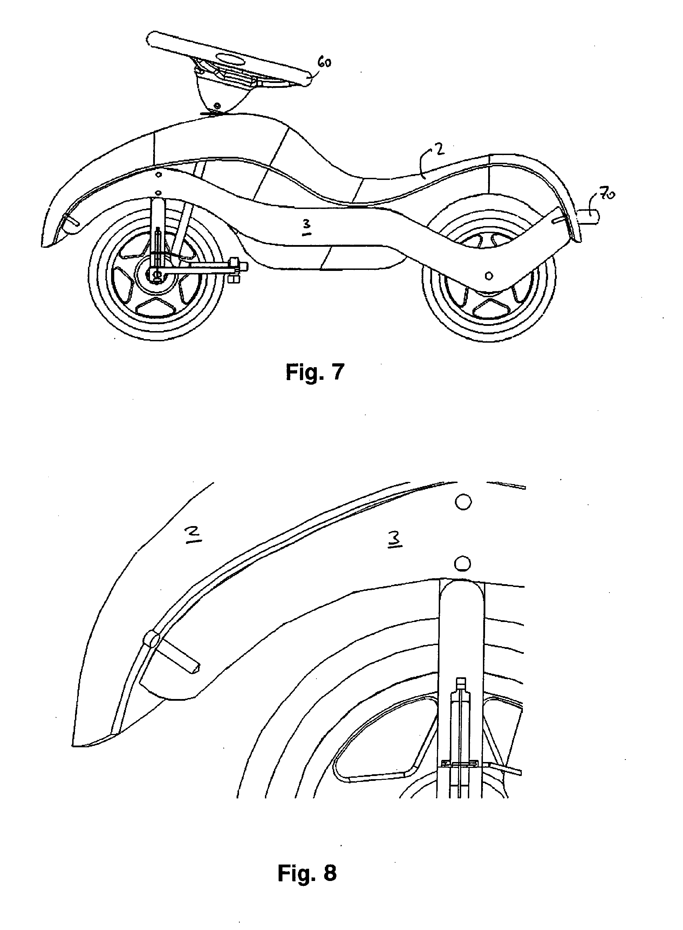

Figur 7 zeigt eine Seitenansicht der Ausführungsform aus Figur 1 mit einem Schnitt durch die Kontaktbereiche der Schale und des Rahmens. Es ist zu erkennen, dass die Schale an drei Punkten auf dem Rahmen aufliegt und dadurch eine hohe Stabilität erhält. Im vorderen Bereich und im hinteren Bereich ist die nach unten offene Schale mit Schrauben an dem Rahmen 2 befestigt. Im Sitzbereich hingegen liegt die Schale lediglich auf dem Rahmen auf, so dass Spannungen innerhalb der Schale bei Belastungen vermieden werden können.

Figur 8 zeigt eine Detailansicht der Ansicht aus Figur 7.

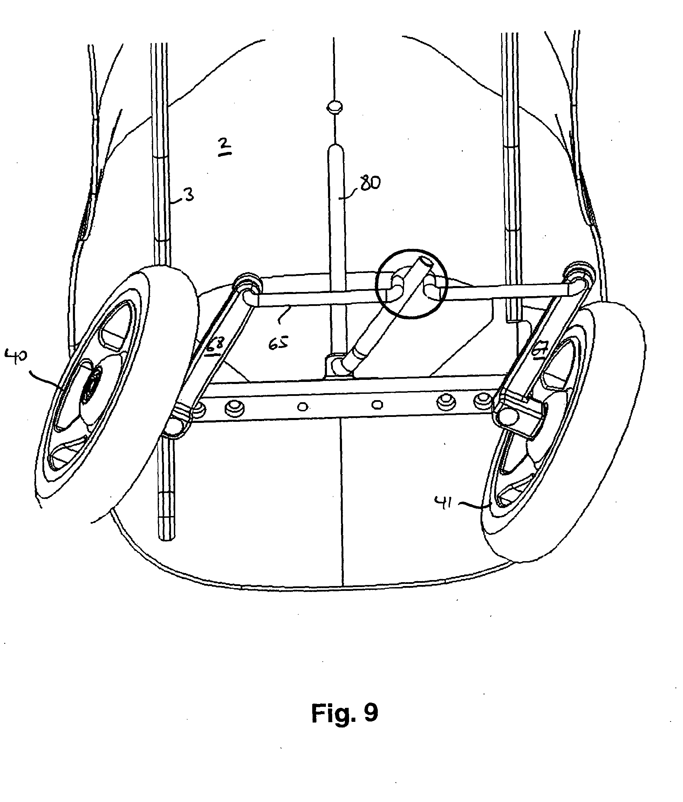

Figur 9 zeigt einen Lenkmechanismus der in Figur 6 gezeigten Ausführungsform unter Darstellung der Einschlagbegrenzung bei eingeschlagenen Rädern.

## Patentansprüche

1. Kinderfahrzeug (1), umfassend einen Fahrzeugkörper (2), an dem Vorderräder (40, 41) und Hinterräder (50, 51) vorgesehen sind, **dadurch gekennzeichnet, dass** der Fahrzeugkörper (2) eine nach unten offene Schale aus Faserverbundwerkstoff umfasst, und die Räder über einen Rahmen (3) an der Schale befestigt sind, der mit der Schale verbunden ist.

2. Kinderfahrzeug nach Anspruch 1, wobei die Vorderräder lenkbar sind.

3. Kinderfahrzeug nach Anspruch 1 oder 2, **dadurch gekennzeichnet, dass** der Faserverbundwerkstoff Kohlefaser und Glasfaser enthält.

4. Kinderfahrzeug nach Anspruch 3, **dadurch gekennzeichnet, dass** ein Kohlefasergewebe auf der Außenseite der Schale vorgesehen ist.

5. Kinderfahrzeug nach einem der Ansprüche 1 bis 4, **dadurch gekennzeichnet, dass** der Rahmen und die Schale lösbar verbunden sind, insbesondere verschraubt sind.

6. Kinderfahrzeug nach einem der Ansprüche 1 bis 5, **dadurch gekennzeichnet, dass** die Räder mit einer Gummibereifung versehen sind.

7. Kinderfahrzeug nach einem der Ansprüche 1 bis 6, **dadurch gekennzeichnet, dass** der Rahmen (3) aus Metall besteht.

8. Kinderfahrzeug nach einem der Ansprüche 1 bis 7, **dadurch gekennzeichnet, dass** an dem Fahrezeugkörper (2) eine Anhängerkupplung (70) vorgesehen ist.

9. Kinderfahrzeug nach einem der vorstehenden Ansprüche, weiterhin umfassend einen Anhänger, der an der nach unten offenen Schale lösbar befestigt ist.

10. Kinderfahrzeug nach einem der vorstehenden Ansprüche, **dadurch gekennzeichnet, dass** eine Lenkung mit Einschlagsbegrenzung vorgesehen ist.
